Europäisches Patentamt

European Patent Office

Office européen des brevets

(11) Publication number: **0 468 595 A1**

## EUROPEAN PATENT APPLICATION

(21) Application number: **91201942.9**

(22) Date of filing: **24.07.91**

(51) Int. Cl.5: **C08G 61/08**, C08L 65/00

(30) Priority: **25.07.90 GB 9016271**

(43) Date of publication of application:
**29.01.92 Bulletin 92/05**

(84) Designated Contracting States:
**AT BE CH DE DK ES FR GB GR IT LI LU NL SE**

(71) Applicant: SHELL INTERNATIONALE
RESEARCH MAATSCHAPPIJ B.V.
Carel van Bylandtlaan 30
NL-2596 HR Den Haag(NL)

(72) Inventor: Van Deursen, Joseph Hubertus
Badhuisweg 3
NL-1031 CM Amsterdam(NL)
Inventor: Kouwenoord, Peter
Badhuisweg 3
NL-1031 CM Amsterdam(NL)

(54) **Thickened dicyclopentadiene systems.**

(57) Thickened dicyclopentadiene systems comprising dicyclopentadiene and a polycycloolefin polymer obtainable via a ring opening polymerization of at least a monomer having a norbornene moiety in its molecule.

The present invention relates to thickened dicyclopentadiene systems and to the polydicyclopentadiene systems derived therefrom.

Dicyclopentadiene, hereinafter referred to as DCPD, is an useful and economically attractive starting material for the preparation of tough and rigid poly-DCPD materials, in the presence of a catalyst system, e.g. a metathesis catalyst system.

Although in general the mechanical performance properties of the poly-DCPD systems are already on a high level, the DCPD starting compositions are frequently formulated to include one or more additives, the presence of which will further enhance the performance of the poly-DCPD system. One class of such additives are elastomeric polymers, the presence of which may considerably increase the toughness of the poly-DCPD systems, without causing a serious drop in the rigidity of the system. However the presence of such an elastomeric material will simultaneously result in an increase in viscosity of the DCPD system, which increase in viscosity is not necessarily considered to be a disadvantage, as it is known that an increase in the viscosity of the DCPD system may overcome mould-leakage and simultaneously have a benefical influence on the flow characteristics in the mould. In general, the viscosity of a DCPD system containing up to 10 %m of an elastomeric material used for increasing the impact strength, is still considered to be acceptable for many applications, the actual amount used being dependent on the molecular weight of said polymer. It will be appreciated when employing an elastomeric material having a high molecular weight, that a smaller amount of said material will be required for the preparation of a thickened DCPD system of a given viscosity, than would be the case with a lower molecular weight elastomer of the same type. Hence when only the viscosity of a DCPD system for the preparation of poly-DCPD has to be increased, i.e. an increase in the viscosity without simultaneously substantially changing the performance properties of the ultimate poly-DCPD system, the use of a small amount of a high molecular weight polymer would be advantageous. It has been experienced that the use of as little as 1 %m or even less of a high molecular weight polymer, such as a polyisoprene (mol.wt. $2 \times 10^6$) or a polyisobutylene (mol.wt. $4-5 \times 10^6$) as thickening agent for DCPD, will provide a similar viscosity as was obtained with e.g. 8 %m of a given thermoplastic rubber. It was also experienced, irrespective of the type and amount of elastomer as used up to now, that the ultimate poly-DCPD systems were not transparent, showing varying degrees of turbidity, which is of course unacceptable when the transparency of the ultimate poly-DCPD article is an important requirement.

As a result of extensive research and experimentation thickened DCPD systems could be developed for the preparation of poly-DCPD systems having considerably improved transparency, by employing selected polycycloolefins as thickening agent.

The invention provides therefore thickened dicyclopentadiene (DCPD) systems comprising DCPD and a polycycloolefin polymer obtainable via a ring opening polymerization of at least a monomer having a norbornene moiety in its molecule.

It will be appreciated that the polycycloolefin polymers under consideration will have to be essentially non-crosslinked polymers in order to be soluble in DCPD and to act as a thickening agent therefor.

The polycycloolefin polymers for use in the thickened DCPD systems of the present invention are polymers based on at least a monomer having a norbornene moiety in its molecule, hereinafter referred to as norbornene monomer. Said polycycloolefin polymers maybe homopolymers of such a norbornene monomer, copolymers of more than one norbornene monomer or copolymers of at least a norbornene monomer and a polymerizable other type of monomer. Examples of such norbornene monomers include 2-norbornene and derivatives thereof, such as substituted 2-norbornene carrying one or more lower alkyl groups, such as for example linear or branched $C_1-C_{10}$ alkyl groups, or aryl substituents. Preferably the substituents occupy the 5 and/or 6 position in the 2-norbornene molecule. Examples of such substituted norbornenes include 5-methyl-2-norbornene, 5,6-dimethyl-2-norbornene, 5-ethyl-2-norbornene, 5-butyl-2-norbornene, 5-hexyl-2-norbornene, 5-octyl-2-norbornene and 5-decyl-2-norbornene. A special class of substituted norbornenes comprises those which are substituted in the 5- and 6-position and wherein the two substituents together with the two carbon atoms of the norbornene moiety carrying said substituents, form a saturated or unsaturated mono- or polycyclic hydrocarbyl substituent. Examples of norbornene monomers containing a mono- or polycyclic hydrocarbyl substituent include dicyclopentadiene and methyl-tetracyclododecene.

Suitable other polymerizable monomers include mono- and dicycloolefins such as for example cyclobutene, cyclopentene, cyclopentadiene, cyclooctene, cyclooctadiene, cyclododecene, cyclododecatriene and norbornadiene, as well as non-conjugated acyclic olefins, preferably 1- and 2-olefins, such as for example 1-butene, 3-methyl-1-butene, 2-pentene and 4-methyl-2-pentene.

The preparation of the polycycloolefin polymers as described hereinbefore is known and has been described e.g. in Die Makromoleculare Chemie 130 (1969) 153-165 (Nr. 3179), in United States Patent No.

4,418,179 and in Japanese published patent applications 53-92000 and 53-111399.

It will be appreciated, that with the preparation of polycycloolefins based on at least a polyfunctional norbornene monomer, i.e. a monomer having more than one polymerizable or active group, there is a considerable chance for the formation of crosslinked polymer. Hence it is preferred to employ norbornene type monomers having only one polymerizable double bound, 2-norbornene being a preferred monomer for the preparation of the polycycloolefin polymers. Preferred polycycloolefins are 2-norbornene homopolymers. It will equally be appreciated that the formation of crosslinked material, as described hereinbefore, may be considerably reduced or even avoided altogether, by employing only small amounts of the polyfunctional monomer relative to that of the monofunctional monomers, and/or conducting the polymerization under carefully controlled conditions.

The amount of polycycloolefin polymer to be used as thickening agent for the preparation of thickened DCPD systems will be governed on the one hand by the viscosity requirements of the system, which in turn will be related to the type of process for which it will be used, as well as by the performance requirements of the ultimate poly-DCPD systems, and on the other hand by the molecular weight of the polycycloolefin polymer.

When formulating thickened DCPD systems for the preparation of transparent poly-DCPD systems of which the performance properties should be more or less similar to that of neat poly-DCPD, it will be advantageous to employ a small amount of a very high molecular weight polycycloolefin as thickening agent, e.g. 0.1-2.0 %m on DCPD of a polycycloolefin having a molecular weight of e.g. $\geq 10^6$.

It will be appreciated, when formulating transparent thickened poly-DCPD systems based on lower molecular weight polycycloolefin thickening agents, e.g. polycycloolefins as described hereinbefore and having a molecular weight e.g. in the range of from $10^4$-$10^6$, that larger amounts of such polymers will be required.

The thickened DCPD systems of the present invention may conveniently be prepared by dissolving the polycycloolefin polymer in the desired amount in the DCPD by any suitable technique, such as for example by dissolving the powdered polycycloolefin polymer or polycycloolefin crumb in DCPD in a ball mill, with the aid of an impeller or a high speed mixer.

The thickened DCPD systems of the present invention will generally be employed for the preparation of poly-DCPD systems, which preparation will generally require the presence of a catalyst system. Catalyst systems which may advantageously be employed for the preparation of poly-DCPD include Ziegler-Natta catalyst systems as well as metathesis catalyst systems. Hence thickened DCPD systems containing appropriate amounts of a catalyst or at least a component of a multi-component catalyst system for the preparation of poly-DCPD are also considered to be a feature of the present invention. The use of such catalyst systems is known from e.g. Die Makromolekulare Chemie 130 (1969) 153-165 (Nr. 3179), EP Patent 0084888 and EP Patent Application No. 0222432. As it is known that some of the catalyst systems or components thereof are sensitive to moisture and/or oxygen, it is preferred to use moisture-free materials, such as for example dried DCPD, in the preparation of the poly-DCPD and in the absence of oxygen, e.g. in a nitrogen atmosphere. Dried DCPD can be obtained e.g. by perculating DCPD with the aid of molecular sieves and preferably in an inert, e.g. a nitrogen atmosphere.

In the context of the present invention the term thickened DCPD system is considered to refer to both thickened systems containing only DCPD as the compound to be thickened as well as mixtures of DCPD with minor amounts of one or more copolymerizable monomers. Examples of suitable copolymerizable monomers include 2-norbornene and derivatives thereof, as described hereinbefore, as well as related compounds described in EP Patent Application No. 0372600.

A further feature of the present invention is the preparation of poly-DCPD systems, and especially transparent poly-DCPD systems, employing the thickened DCPD systems of the present invention. Said preparation may be accomplished by any known technique and will preferably be conducted via the so-called reaction injection moulding (RIM) process and employing a metathesis catalyst system. The RIM process is known e.g. from EP 0084888.

The poly-DCPD systems prepared from the thickened DCPD systems of the present invention were found to be clear and transparent and far superior in this respect compared to similar products based on other types of thickening agent.

The invention will be further illustrated by the following examples, without however restricting its scope to these embodiments.

Example I

Preparation of thickened DCPD.

DCPD (147.75) which had been dried by perculation over mol sieves 4A under a nitrogen atmosphere, was introduced into a 250 ml glass bottle which had been flushed with nitrogen and containing 2,25 g of dry, powdered commercially available polynorbornene (Norsorex AP, is Trade Mark of Carbonage de France) having a molecular weight $2x10^6$, and placed on a roller table at 50-60 °C to dissolve the polynorbornene. Using the thus prepared solution, three polynorbornene solutions in DCPD were prepared having respectively a polynorbornene content of 0.5, 1.0 and 1.5 %m. The viscosity of these solutions were measured using a Contraves LS 30 (couette type) viscometer (Trade Mark) under the conditions as indicated in Table I,which Table also presents the corresponding viscosity data.

Comparative Experiments A-D

The procedure of Example I was repeated but replacing the polynorbornene with appropriate amounts of the following materials to prepare solutions having a thickening agent content as indicated in Table I:

a) polyisoprene rubber (CARIFLEX IR 305, is Trade Mark of Shell) mol.wt. $2x10^6$,

b) polyisobutylene rubber (Oppanol B200, is Trade Mark of BASF) mol.wt. $4-5x10^6$,

c) styrene-butadiene-styrene block copolymer (CARIFLEX TR 1101, is Trade Mark of Shell) mol.wt. 71500,

d) styrene-butadiene-styrene block copolymer (CARIFLEX TR 1102, is Trade Mark of Shell) mol.wt. 49700.

The corresponding viscosity data have been collected in Table I.

Example II

Preparation of poly-DCPD.

18.7 g of a 1 %m polynorbornene solution in DCPD, as prepared in Example I, were introduced with the aid of a dry syringe into a 30 ml glass bottle, equipped with a serum cap, which had been flushed with nitrogen. This was followed, via a similar addition procedure, by 0.5 g of a 10 %m solution of bis (2,6-diisopropylphenoxy) tungsten tetrachloride (DIPC) in dry DCPD. After homogenizing by shaking, 0.8 g of a 10 %m solution of tri-n-butyl tin hydride were added in the same manner. After homogenizing for approximately 5 sec. the bottle was placed in an oil bath (oil temp. 90 °C) and a thermocouple was inserted into the bottle to record the temperature. 5 Minutes after the bottle contents had reached a temperature of 180 °C the bottle was removed from the bath and allowed to cool to ambient temperature. The resulting transparent poly-DCPD casting was recovered by breaking the bottle.

Comparative Experiments E-H.

The procedure of Example II was repeated but replacing the polynorbornene-containing viscosified DCPD solution with similar solutions containing respectively 1 %m IR 305, 0.75 %m Oppanol B 200, 8.0 %m TR 1102 and pure DCPD.

The ratings for the transparency of the thus produced DCPD castings have been collected in Table II, together with the result of Example II.

4

Table I

| | Thickening agent | Conc %m | Shear rate $(S^{-1})$ | Viscosity at 25 °C (mPa.s) |
|---|---|---|---|---|
| Example I | Norsorex AP | 0.5 | 0.36-100 | 45 |
| | Norsorex AP | 1.0 | 0.26- 5.5 | 330- 300 |
| | Norsorex AP | 1.5 | 0.26- 1.2 | 1650-1500 |
| Comp.exp. A | CARIFLEX IR 305 | 0.5 | 0.26- 1.2 | 60 |
| | CARIFLEX IR 305 | 1.0 | 0.26-10 | 330- 280 |
| | CARIFLEX IR 305 | 1.5 | 0.06- 2.2 | 1500-1320 |
| Comp.exp. B | Oppanol B 200 | 0.5 | 0.26-25 | 130- 90 |
| | Oppanol B 200 | 1.0 | 0.26- 5.5 | 1450- 700 |
| | Oppanol B 200 | 1.5 | 0.08- 0.6 | 6240-4300 |
| Comp.exp. C | CARIFLEX TR 1101 | 10 | 0.3 - 1.2 | 1360 |
| Comp.exp. D | CARIFLEX TR 1102 | 10 | 0.3 -25 | 500 |

Table II

| | Thickening agent | Conc %m | Solution | Transparency rating casting (poly DCPD) |
|---|---|---|---|---|
| Example II | Norsorex AP | 1 | 8 | 8 |
| Comp.exp. E | CARIFLEX IR 305 | 1 | 6 | 4 |
| Comp.exp. F | Oppanol B 200 | 0.75 | 3 | 4 |
| Comp.exp. G | CARIFLEX TR 1102 | 10 | 3 | 3 |
| Comp.exp. H | - | - | 10 | 10 |

**Claims**

1. Thickened dicyclopentadiene (DCPD) systems comprising DCPD and a polycycloolefin polymer obtainable via a ring opening polymerization of at least a monomer having a norbornene moiety in its molecule.

2. Thickened DCPD systems as claimed in claim 1, wherein the polycycloolefin polymer is a homopolymer.

3. Thickened DCPD systems as claimed in claim 1, wherein the polycycloolefin polymer is a copolymer of two or more monomers having a norbornene moiety in the molecule or a copolymer of at least a monomer having a norbornene moiety in its molecule and a polymerizable other monomer.

4. Thickened DCPD systems as claimed in any one of claims 1-3, wherein the polycycloolefin polymer is derived from 2-norbornene or a derivative thereof.

5. Thickened DCPD systems as claimed in claim 4, wherein the 2-norbornene derivative is 2-norbornene which has been substituted in the 5- and/or 6-position.

6. Thickened DCPD systems as claimed in claim 5, wherein the substituted 2-norbornene monomer is DCPD.

7. Thickened DCPD systems as claimed in claim 2, wherein the polycycloolefin homopolymer is a 2-norbornene homopolymer.

8. Thickened DCPD systems as claimed in any one of claims 1-7, wherein the DCPD is a mixture of DCPD with a minor amount of one or more copolymerizable monomers.

9. Thickened DCPD systems as claimed in claim 8, wherein the copolymerizable monomer is 2-norbornene or a derivative thereof.

10. Thickened DCPD systems as claimed in any one of claims 1-9, which contain appropriate amounts of a catalyst system or at least a component of a multi-component catalyst system, for the preparation of poly-DCPD.

11. The use of thickened DCPD systems as claimed in any one of claims 1-10 for the preparation of poly-DCPD systems.

12. Poly-DCPD systems preparable from a thickened DCPD system as claimed in any one of claims 1-10.

European
Patent Office

EUROPEAN SEARCH
REPORT

Application Number

EP 91 20 1942

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 359 186 (THE B.F. GOODRICH CO.) <br> * Claims 1,3-10 * <br> – – – | 1-12 | C 08 G 61/08 <br> C 08 L 65/00 |
| X | FR-A-2 307 830 (THE B.F. GOODRICH CO.) <br> * Claims 1-10 * <br> – – – | 1-12 | |
| X | EP-A-0 344 693 (HERCULES INC.) <br> * Claims 1-10 * <br> – – – – – | 1-12 | |

| TECHNICAL FIELDS SEARCHED (Int. Cl.5) |
|---|
| C 08 G <br> C 08 L |

The present search report has been drawn up for all claims

| Place of search | Date of completion of search | Examiner |
|---|---|---|
| The Hague | 10 October 91 | GLANDDIER A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

  & : member of the same patent family, corresponding
document